# EUROPÄISCHE PATENTSCHRIFT

(11) **EP 1 094 741 B1**
(45) Veröffentlichungstag und Bekanntmachung des Hinweises auf die Patenterteilung: **22.05.2002**
(21) Anmeldenummer: 98940089.0
(22) Anmeldetag: 29.06.1998
(51) Int. Cl.: A47J 43/07

(54) **ARBEITSGERÄT ZUM RÜHREN ODER ZERKLEINERN VON NAHRUNGSMITTELN**
DEVICE FOR STIRRING OR GRINDING FOODSTUFFS
APPAREIL POUR REMUER OU BROYER LES ALIMENTS

(30) Priorität: 09.07.1997 DE 19729446
(43) Veröffentlichungstag der Anmeldung: 02.05.2001
(73) Patentinhaber: Braun GmbH, Kronberg (DE)
(72) Erfinder: PENARANDA, Mariano, E-08005 Barcelona (ES); MASIP, Josep M., E-08035 Barcelona (ES); RAFOLS, Robert, E-08100 Sant Fost de Campcentelles (ES); CARRERAS, Francesc, E-08960 Sant Just Desvern (ES)
(86) Internationale Anmeldenummer: EP9803951
(87) Internationale Veröffentlichungsnummer: WO9902082

(56) Entgegenhaltungen:
- EP-A- 0 529 287
- DE-A- 4 301 209
- DE-B- 1 260 716
- DE-C- 4 436 092
- FR-A- 1 117 914

## Beschreibung

Die vorliegende Erfindung bezieht sich auf ein Arbeitsgerät zum Rühren oder Zerkleinern von Nahrungsmitteln gemäß dem Oberbegriff des Anspruchs 1.

Ein solches Arbeitsgerät, wie es auch aus der DE 44 36 092 C1 bekannt ist, besitzt ein langgestrecktes, rohrförmiges Gehäuseteil, in dem eine Antriebswelle mit Abstand zu den Wänden geführt ist und an dessen unterem Bereich einstückig eine Gehäuseglocke angeordnet ist, in der, an dem Ende der Antriebswelle befestigt, ein Messer rotiert. Die Gehäuseglocke ist zu dem rohrförmigen Gehäuseteil hin mit einer Abdeckplatte verschlossen. Die Abdeckplatte ist an ihrem Rand gegen die Gehäusewand mittels eines umlaufenden Dichtungsteils abgedichtet. Mit dieser Dichtung wird erreicht, daß Nahrungsmittel, die mit dem Gerät bearbeitet werden sollen, beispielsweise zerkleinert, püriert oder gemixt werden sollen, nicht in das rohrförmige Gehäuseteil eindringen können. Auch soll die Dichtung verhindern, daß bei der Reinigung des Geräts Spülwasser in das Gehäuse eindringt.

Die Arbeitswelle ist auf ihrer dem Messer abgewandten Seite der Abdeckplatte in einer Lagerhülse gelagert, die ihrerseits in einem Trageteil aufgenommen ist. Dieses Trageteil stützt sich zum einen gegen die Innenseite der Abdeckplatte bzw. gegen einen ringförmigen, die Arbeitswelle umgebenden Fortsatz der Abdeckplatte ab, andererseits legt sie sich an dem Übergangsbereich zwischen dem rohrförmigen Gehäuseteil und der Gehäuseglocke an die Innenseite des Gehäuses abstützend an. Das Trageteil umfaßt weiterhin ein glockenförmiges Dichtungselement, das an seinem Rand in dem ringförmigen Dichtungsteil endet, das die Abdeckplatte gegen die Gehäuseglocke abdichtet.

Zur Montage des Arbeitsgeräts, wie es vorstehend angegeben ist, wird zunächst die Lagerhülse auf die Arbeitswelle aufgeschoben und mittels Sprengringen in axialer Richtung an den Enden an der Arbeitswelle fixiert. Anschließend wird das Trageteil auf die Lagerhülse aufgesteckt und verklemmt sich an der Lagerhülse. Diese Baueinheit wird dann in das Gehäuse eingesetzt, wobei sich das Trageteil in das rohrförmige Wellengehäuse schiebt, sowie in stegartige Fortsätze des Wellengehäuses eingreift. Schließlich wird über das Ende der Arbeitswelle eine Wellendichtung aufgesteckt, die die Arbeitswelle gegenüber dem Trageteil bzw. der Abdeckplatte abdichtet. Als letztes Teil wird die Abdeckplatte aufgesetzt, die an der Innenseite einen rohrförmigen Fortsatz aufweist, der Verriegelungsteile besitzt, die sich auch in den stegartigen Fortsätzen des Wellengehäuses verriegeln. Die Abdeckplatte drückt mit ihrer Innenseite gegen die Wellendichtung einerseits sowie mit ihrem Rand gegen die ringförmige Dichtung des Trageteils andererseits, um einen dichten Abschluß zu erzielen. Schließlich wird das Arbeitsteil, beispielsweise ein Schneidmesser, an dem Ende der Welle verschraubt.

Wie anhand der vorstehenden Erläuterung des Montagevorgangs ersichtlich wird, sind für den Zusammenbau des Arbeitsgeräts mehrere Arbeitsschritte notwendig, um die Arbeitswelle in dem Gehäuse zu lagern, um die Gehäuseglocke gegenüber dem Wellengehäuse mittels der Abdeckplatte abzudichten und um schließlich das Arbeitswerkzeug zu befestigen, indem diese Teile nacheinander in das Gehäuse eingesetzt werden.

Der vorliegenden Erfindung liegt nun die Aufgabe zugrunde, das Arbeitsgerät für einen Stabmixer so auszubilden, daß der Montagevorgang, wie er vorstehend anhand des herkömmlichen Stabmixers, wie er aus der DE 44 36 092 C1 bekannt ist, erläutert ist, zu vereinfachen und zu erleichtern. Gleichzeitig gilt es dabei, mit einfacheren Bauteilen bei gleichguter oder gar besserer Lagerstelle auszukommen.

Die vorstehende Aufgabe wird bei einem gattungsgemäßen Arbeitsgerät durch die kennzeichnenden Merkmale des Anspruchs 1 gelöst. Zunächst wird an dem Fortsatz der Abdeckplatte das Trageteil aufgesetzt und mittels der Verriegelungsteile daran verriegelt. Anschließend wird die Lagerhülse eingesetzt. Die einzelnen Teile sind so ausgestaltet, daß sie ineinander eingreifen und miteinander fest verbunden sind. Schließlich wird das Ende der Arbeitswelle in die Lagerhülse dieser Einheit eingesteckt und die Arbeitswelle daran gesichert. Zuletzt wird dann das Arbeitswerkzeug auf das Ende der Arbeitswelle, beispielsweise ein Schneidmesser, angeordnet. Diese Baugruppe bildet eine vormontierte Einheit, die in einem abschließenden Montageschritt in die Gehäuseglocke eingesetzt wird. Dadurch, daß die einzelnen Teile, d.h. das Trageteil, die Abdeckplatte, die Lagerhülse und die Arbeitswelle, außerhalb des Gehäuses vormontiert werden, sind diese Teile gut zugänglich, so daß ein sicherer Sitz gewährleistet ist, der vor der Endmontage in dem Gehäuse überprüft werden kann. Ebenso ergibt sich ein erheblich einfacherer Aufbau der Lagerstelle.

Bevorzugt ist das Trageteil aus zwei im wesentlichen rohrförmigen Abschnitten mit unterschiedlichen Durchmessern aufgebaut mit einer Schulterfläche im Übergangsbereich zwischen den zwei Rohrabschnitten. Diese Schulterfläche bietet eine konstruktiv einfache Möglichkeit, die Verriegelungsteile, die der Abdeckplatte zugeordnet sind, zu verriegeln. Eine solche Verriegelung kann, gemäß Anspruch 3, mittels Öffnungen in der Schulterfläche erfolgen, durch die sich dann jeweils solche Verriegelungsteile erstrecken. Verriegelungsteile, wie sie vorstehend angegeben sind, können durch Stege mit hakenförmigen Enden gebildet werden, wobei sich solche hakenförmige Enden dann durch Öffnungen in der Schulterfläche hindurch erstrecken und sich an dem Öffnungsrand verhaken.

Um einen sicheren Halt zu erzielen und die Kräfte gleichmäßig um den Umfang des Trageteils bzw. des Fortsatzes der Abdeckplatte zu verteilen, werden bevorzugt vier Verriegelungsteile vorgesehen (Anspruch 5).

Mit der erfindungsgemäßen Anordnung ist es ausreichend, daß, gemäß Anspruch 6, die Zentrierung und Lagerung der Arbeitswelle in dem Gehäuse über die Abdeckplatte erfolgt. Dies bedeutet, daß die Arbeitswelle im unteren Abschnitt des Wellengehäuses ohne eine weitere Abstützung an dem Wellengehäuse gelagert wird.

Um eine gute Dichtung und einen sicheren Halt der Abdeckplatte in der Gehäuseglocke und somit auch eine sichere Befestigung der Baugruppe im Gehäuse zu erzielen, wird vorzugsweise die Abdeckplatte mit ihrem Rand in der Gehäuseglocke eingeklebt oder angeschweißt gehalten (Anspruch 7). Beim Schweißen erfolgt dies beispielsweise durch Ultraschallschweißen oder ähnliche Schweißverfahren, um eine innige Verbindung zwischen Abdeckplatte und Gehäuse zu erhalten.

Der Aufbau der Abdeckplatte mit ihrem Fortsatz und der Aufbau des Trageteils mit dem unteren rohrförmigen Abschnitt bieten die Möglichkeit, daß, gemäß Anspruch 8, ein Wellendichtring zwischengefügt wird, der die Abdeckplatte im Bereich ihrer Bohrung, durch die die Arbeitswelle hindurchführt, gegen die Arbeitswelle abdichtet. Dieser Wellendichtring wird gleichzeitig zwischen diesen Teilen verklemmt, wenn diese miteinander verbunden bzw. verriegelt werden, wie dies vorstehend angegeben ist.

Um die Lagerhülse gegen ein axiales Verschieben in dem Trageteil zu sichern, wird die Lagerhülse vorzugsweise, gemäß Anspruch 9, mit einem Bund versehen, der sich auf einer entsprechend ausgebildeten Lagerfläche des Trageteils abstützt. Dieser Bund sollte gemäß Anspruch 10 radial zu der Arbeitswelle verlaufend ausgebildet werden.

Für eine zusätzliche Sicherung der Lagerhülse können, gemäß Anspruch 11, einrastende Elemente vorgesehen werden, die die Lagerhülse in dem Trageteil fixieren. Solche einrastenden Elemente werden bevorzugt, gemäß Anspruch 12, dem Trageteil zugeordnet, die, als hakenförmige Teile ausgebildet (Anspruch 13), die Stirnfläche der Lagerhülse übergreifen.

Damit die Arbeitswelle in ihrer Anordnung in Bezug auf die Lagerhülse exakt festgelegt ist, bevor die aus der Abdeckplatte, dem Trageteil und der Lagerhülse bestehende Einheit in dem Gehäuse montiert wird, werden die Lagerhülse und die Arbeitswelle durch einen Wulst, der auf die Arbeitswelle aufgesetzt ist, fixiert, wie dies in Anspruch 15 angegeben ist. Ein solcher Wulst wird vorzugsweise durch einen Sicherungsring gebildet, der auf die Arbeitswelle im Bereich einer entsprechenden Nut aufgeklemmt wird (Anspruch 16).

Weitere Einzelheiten und Merkmale des erfindungsgemäßen Arbeitsgeräts ergeben sich aus der nachfolgenden Beschreibung von Ausführungsbeispielen anhand der Zeichnung. In der Zeichnung zeigt:
- Fig. 1: einen Schnitt durch ein Arbeitsgerät in Form eines Stabmixers im Bereich des unteren Endes des Wellengehäuses und der sich daran anschließenden Gehäuseglocke gemäß einer ersten Ausführungsform,
- Fig. 2: eine Explosionsansicht der in die Gehäuseglocke der Fig. 1 eingesetzten Baueinheit,
- Fig. 3: die Anordnung der Fig. 2 in montiertem Zustand, bereit, in ein Gehäuse eingesetzt zu werden, und
- Fig. 4: einen Schnitt, entsprechend der Fig. 1, der eine zweite Ausführungsform eines Arbeitsgeräts darstellt.

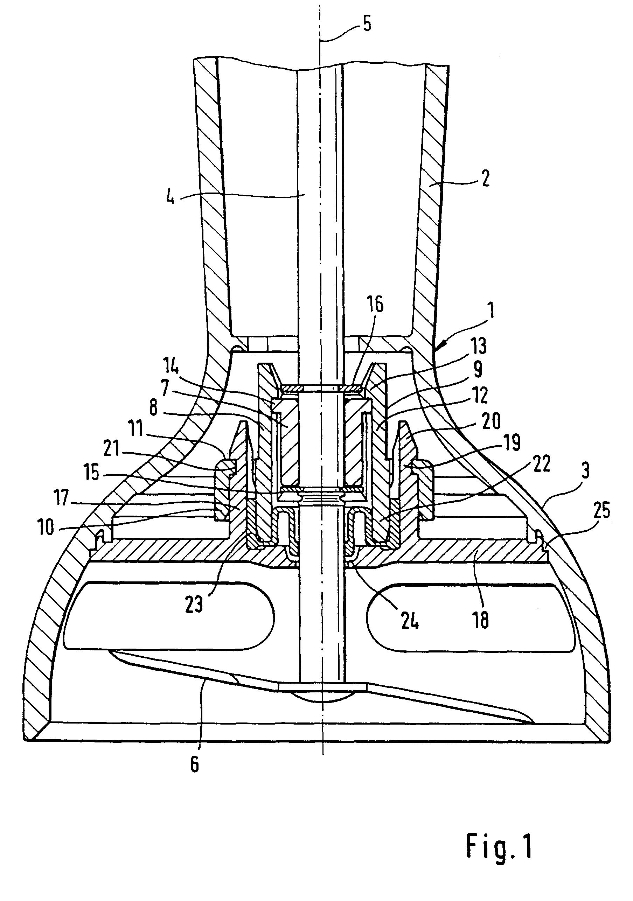

Das Arbeitsgerät, wie es in der Schnittdarstellung seines unteren Endes in der Fig. 1 dargestellt ist, weist ein Gehäuse 1 mit einem rohrförmigen Wellengehäuse 2 und einer sich daran anschließenden, erweiterten Gehäuseglocke 3 auf. In dem Gehäuse 1 ist eine Arbeitswelle 4 so geführt, daß deren Achse 5 in dem rohrförmigen Wellengehäuse 2 und der Gehäuseglocke 3 zentriert ist.

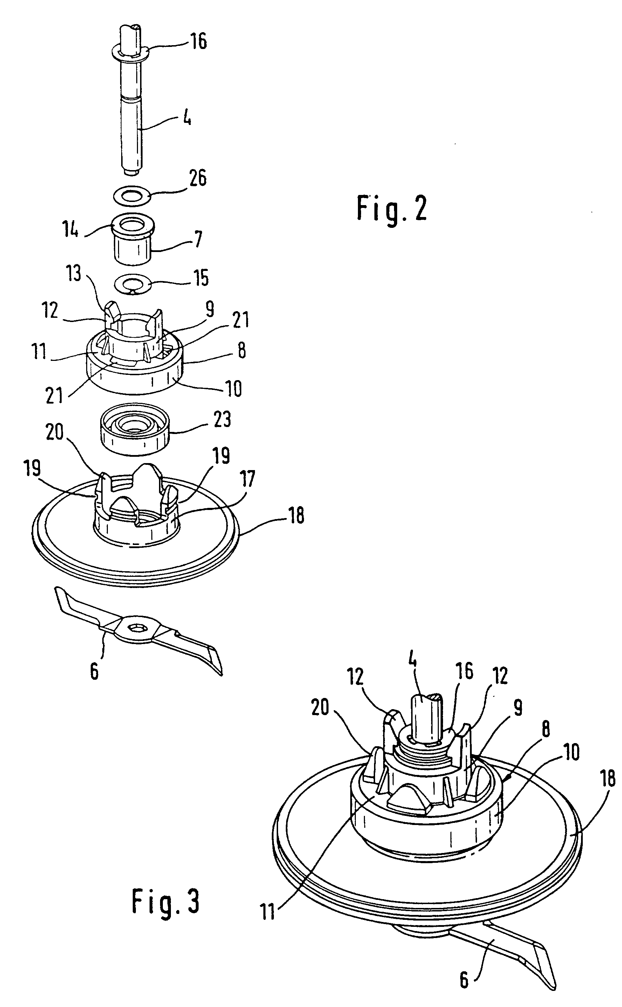

Die Arbeitswelle 4, die an ihrem abtriebsseitigen Ende ein Messer 6 trägt, ist in einer Lagerhülse 7 geführt, die ihrerseits in ein Trageteil 8 eingesetzt ist. Das Trageteil 8 umfaßt einen oberen, dem antriebsseitigen Ende der Arbeitswelle 4 zugeordneten Abschnitt 9 und einen unteren, rohrförmigen Abschnitt 10, der gegenüber dem oberen Abschnitt 9 einen größeren Durchmesser besitzt. Im Übergangsbereich zwischen dem oberen Abschnitt 9 und dem unteren Abschnitt 10 ist eine sich radial zu der Achse 5 der Arbeitswelle 4 erstreckende Schulterfläche 11 geformt. Der obere Abschnitt 9 besitzt zwei gegenüberliegende Rastelemente 12 mit hakenförmigen Teilen 13 an ihren freien Enden, die nach innen, d.h. zu der Achse 5 der Arbeitswelle 4 hin, gerichtet sind und einen Bund 14, der über den Außenumfang der Lagerhülse 7 nach außen übersteht, übergreifen, so daß die Lagerhülse 7 gegen ein axiales Verschieben gesichert ist. Die einzelnen Teile sind in den Figuren 2 und 3 nochmals perspektivisch dargestellt.

Wie weiterhin in Fig. 1 zu erkennen ist, ist die Lagerhülse 7 gegen ein axiales Verschieben an der Arbeitswelle 4 durch einen unteren Sicherungsring 15, der sich in eine Nut der Arbeitswelle 4 einlegt, und durch einen oberen Sicherungsring 16, der entsprechend in eine Nut der Arbeitswelle 4 aufgeklemmt ist, die sich jeweils an die untere und die obere Stirnseite der Lagerhülse 7 anlegen, gesichert.

Das Trageteil 8 ist seinerseits an einem rohrförmigen Fortsatz 17, der sich von der Abtriebsseite einer Abdeckplatte 18 erstreckt, gehalten, wie dies auch den Figuren 2 und 3 zu entnehmen ist. Die Abdeckplatte 18 dient dazu, die Gehäuseglocke 3 zu dem Wellengehäuse 2 hin abzudichten. Der rohrförmige Fortsatz 17 umfaßt vier Verriegelungsteile 19 mit hakenförmigen Enden 20. Der rohrförmige Fortsatz 17 bzw. die sich daran anschließenden, hakenförmigen Enden 20 sind so dimensioniert, daß sie sich an die Innenfläche des unteren Abschnitts 10 anlegen. Die hakenförmigen Enden 20 führen durch Öffnungen 21 hindurch und verriegeln sich an der Oberseite der Schulterfläche 11, so daß das Trageteil 8 und die Abdeckplatte 18 bzw. deren rohrförmiger Fortsatz 17 fest miteinander verbunden sind.

Wie in Fig. 1 zu erkennen ist, ist der Abschnitt 9 des Trageteils 8 zu dem abtriebsseitigen Ende der Arbeitswelle 4 bzw. der Abdeckplatte 18 hin verlängert, so daß dieser verlängerte Teil 22 den rohrförmigen Fortsatz 17 überdeckt. Der verlängerte Teil 22 reicht annähernd bis zu der Abdeckplatte 18, und zwischen diesem verlängerten Teil 22 und dem rohrförmigen Fortsatz 17 ist eine Wellendichtung 23 verklemmt, die die Abdeckplatte 18 und die Arbeitswelle 4 im Bereich einer Bohrung 24 abdichtet. Die Lageranordnung der Arbeitswelle 4 mittels der Abdeckplatte 18, des Trageteils 8 und der Lagerhülse 7 so, wie sie vorstehend beschrieben und in den Einzelteilen in Fig. 2 gezeigt ist, kann als Einheit, wie sie in Fig. 3 dargestellt ist, vormontiert werden.

Hierzu wird zunächst die Abdeckplatte mit ihrem rohrförmigen Fortsatz 17 bereitgestellt und die Wellendichtung 23 in den rohrförmigen Fortsatz 17 eingesetzt. Anschließend wird, wie die Figuren 2 und 3 zeigen, das Trageteil 8 mit seinem unteren Abschnitt 10 über den rohrförmigen Fortsatz 17 der Abdeckplatte 18 geschoben, so daß die vier hakenförmigen Enden 20 der Verriegelungsteile 19 in die vier Öffnungen 21 in der Schulterfläche 11 eingeführt werden. Schließlich wird die Lagerhülse 7 auf die Arbeitswelle 4, gegen den oberen Sicherungsring 16 anschlagend, eingesetzt und mit einem unteren Sicherungsring 15 gegen eine axiale Verschiebung auf der Arbeitswelle 4 gesichert. Gegebenenfalls können noch Unterlegscheiben 26 zwischengefügt werden. Die Arbeitswelle 4 mit der darauf aufgesetzten Lagerhülse 7 wird dann in die zentrale Öffnung des oberen Abschnitts 9 des Trageteils 8 eingesteckt, bis dann der Bund 14 der Lagerhülse 7 an den abgeschrägten Endflächen der Rastelemente 12 zur Anlage kommt. Unter weiterem Einschieben der Lagerhülse 7 in den oberen Abschnitt 9 drücken sich die Rastelemente 12 auseinander, bis dann der Bund 14 an den hakenförmigen Teilen 13 verriegelt wird. Zuletzt wird das Messer 6 auf das Ende der Arbeitswelle 4 aufgesetzt, so daß sich die vormontierte Baueinheit entsprechend der Fig. 3 ergibt. Diese vormontierte Anordnung wird von der offenen Seite der Gehäuseglocke 3 aus in das Gehäuse 1 eingeschoben und mittels der Abdeckplatte 18 zentriert.

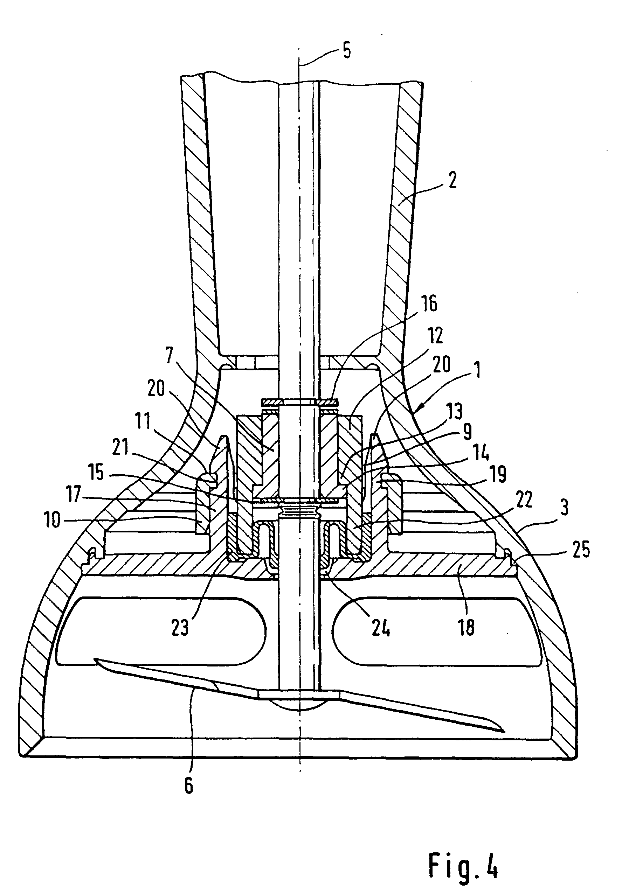

Fig. 4 zeigt eine weitere Ausführungsform eines Arbeitsgeräts in einer Schnittdarstellung, die der Schnittdarstellung der Fig. 1 entspricht, die in ihren wesentlichen Bauteilen mit der Ausführungsform der Fig. 1 identisch ist. Insofern sind für diese identischen oder vergleichbaren Teile dieselben Bezugszeichen wie diejenigen der Ausführungsform entsprechend der Darstellung der Fig. 1 verwendet.

Im Vergleich zu der Ausführungsform der Fig. 1 sind die Lagerhülse 7 sowie der obere Abschnitt 9 des Trageteils 8 abgeändert. Während in der Ausführungsform der Fig. 1 der Bund 14 an dem oberen, antriebsseitigen Ende der Lagerhülse 7 ausgebildet ist, der von den hakenförmigen Teilen 13 übergriffen und dadurch in dem Trageteil 8 gehalten wird, ist in der Ausführungsform der Fig. 4 diese Lagerhülse 7 so gedreht, daß der Bund 14 der Lagerhülse 7 zu dem abtriebsseitigen Ende der Arbeitswelle 4, das das Messer 6 trägt, hin gerichtet ist. Zur Fixierung der Lagerhülse 7 sind die hakenförmigen Teile 13, in axialer Richtung gesehen, weiter zu der Mitte des oberen Abschnitts 9 des Trageteils 8 hin verlegt, so daß sie sich auf dem Bund 14 abstützen.

## Patentansprüche

1. Arbeitsgerät zum Rühren oder Zerkleinern von Nahrungsmitteln mit einer Arbeitswelle (4), die in einem Wellengehäuse (2) im Bereich ihres Antriebsendes mit einem Antriebsmotor einer Küchenmaschine kuppelbar ist und die im Bereich ihres Abtriebsendes zentrisch in einer Lagerhülse (7) gelagert und in axialer Richtung fixiert ist und an deren Abtriebsende ein Arbeitsteil (6) befestigt ist, wobei das Wellengehäuse (2) im Bereich des Abtriebsendes der Welle (4) in eine erweiterte Gehäuseglocke (3) übergeht, deren Innenraum zu dem Innenraum des Wellengehäuses (2) hin durch eine Abdeckplatte (18) getrennt ist, die nach außen von dem Abtriebsende über eine Bohrung (24) durchdrungen wird, und wobei die Lagerhülse (7) in ein Trageteil (8), das sich an der Abdeckplatte (18) auf deren zu dem Innenraum des Wellengehäuses (2) hin weisenden Seite abstützt und einen Fortsatz (17) der Abdeckplatte (18) axial überdeckt, eingesetzt und in axialer Richtung gehalten ist,
**dadurch gekennzeichnet,**
**daß** das Trageteil (8) mittels Verriegelungsteilen (19) mit dem Fortsatz (17) der Abdeckplatte (18) fest verbunden ist, und daß die Abdeckplatte (18), das Trageteil (8) und die Lagerhülse (7), auf die Arbeitswelle (4) aufgesetzt, eine handhabbare Baugruppe mit dieser bilden.

2. Arbeitsgerät nach Anspruch 1,
**dadurch gekennzeichnet,**
**daß** das Trageteil (8) einen unteren, der Abdeckplatte (18) zugewandten, rohrförmigen Abschnitt (10) aufweist, der über eine sich etwa radial zu der Achse (5) der Arbeitswelle (4) erstreckenden Schulterfläche (11) in einen oberen, rohrförmigen Abschnitt (9), der die Lagerhülse (7) aufweist, übergeht, wobei in dieser Schulterfläche (11) der Fortsatz (17) der Abdeckplatte (18) verriegelt ist.

3. Arbeitsgerät nach Anspruch 2,
**dadurch gekennzeichnet,**
**daß** in der Schulterfläche (11) mindestens zwei Öffnungen (21) vorgesehen sind, durch die sich die Verriegelungsteile (19) erstrecken.

4. Arbeitsgerät nach Anspruch 1,
**dadurch gekennzeichnet,**
**daß** die Verriegelungsteile (19) jeweils durch einen Steg mit einem hakenförmigen Ende (20) gebildet sind.

5. Arbeitsgerät Anspruch 1,
**dadurch gekennzeichnet,**
**daß** vier Verriegelungsteile (19) vorgesehen sind, die gleichmäßig um den Umfang um das Trageteil (8) und/oder den Fortsatz (17) der Abdeckplatte (18) herum verteilt sind.

6. Arbeitsgerät nach Anspruch 1,
**dadurch gekennzeichnet,**
**daß** die Zentrierung und Lagerung der Arbeitswelle (4) in dem unteren Abschnitt des Wellengehäuses (2) und der Gehäuseglocke (3) mittels der Abdeckplatte (18) erfolgt.

7. Arbeitsgerät nach Anspruch 1,
**dadurch gekennzeichnet,**
**daß** die Abdeckplatte (18) mit ihrem Rand (25) in die Gehäuseglocke (3) eingeklebt oder eingeschweißt gehalten ist.

8. Arbeitsgerät nach Anspruch 2,
**dadurch gekennzeichnet,**
**daß** zwischen dem Fortsatz (17) der Abdeckplatte (18) und dem unteren, rohrförmigen Abschnitt (10) des Trageteils (8) ein Wellendichtring (23) die Arbeitswelle (4) gegen die Abdeckplatte (18) im Bereich der Bohrung abdichtend angeordnet ist.

9. Arbeitsgerät nach Anspruch 1,
**dadurch gekennzeichnet,**
**daß** die Lagerhülse (7) einen Bund (14) aufweist, der sich an eine Lagerfläche des Trageteils (8) in axialer Richtung abstützt.

10. Arbeitsgerät nach Anspruch 9,
**dadurch gekennzeichnet,**
**daß** der Bund (14) radial zu der Arbeitswelle (4) verlaufend ausgebildet ist.

11. Arbeitsgerät nach Anspruch 1,
**dadurch gekennzeichnet,**
**daß** die Lagerhülse (7) mittels einrastender Elemente (13) in dem Tragteil (8) gehalten ist.

12. Arbeitsgerät nach Anspruch 11,
**dadurch gekennzeichnet,**
**daß** die einrastenden Elemente (13) an dem Tragteil (8) gebildet sind.

13. Arbeitsgerät nach Anspruch 11,
**dadurch gekennzeichnet,**
**daß** die einrastenden Elemente hakenförmige Teile (13) sind, die die Stirnfläche der Lagerhülse (7) übergreifen.

14. Arbeitsgerät nach Anspruch 1,
**dadurch gekennzeichnet,**
**daß** die Lagerhülse (7) durch einen auf die Arbeitswelle (4) aufgesetzten Sicherungsring (16) an ihrem antriebsseitigen Ende gegen eine axiale Verschiebung fixiert ist.

15. Arbeitsgerät nach Anspruch 1,
**dadurch gekennzeichnet,**
**daß** die Lagerhülse (7) an der Arbeitswelle (4) auf ihrem abtriebsseitigen Ende durch einen an der Arbeitswelle (4) gebildeten, über den Umfang der Arbeitswelle (4) vorstehenden Wulst (15) gegen eine axiale Verschiebung fixiert ist.

16. Arbeitsgerät nach Anspruch 15,
**dadurch gekennzeichnet,**
**daß** der Wulst durch einen Sicherungsring (15) gebildet ist.

## Claims

1. A processing tool for mixing or comminuting food materials, with a working shaft (4) which, carried in a shaft housing (2), is adapted to be coupled to a drive motor of a kitchen appliance in the area of its input end and which, in the area of its output end, is centrally carried in a bearing sleeve (7) and fixed in an axial direction and has fastened to its output end a work performing element (6), said shaft housing (2) merging in the area of the output end of the shaft (4) into a flared bell-shaped housing (3) whose inner space is separated from the inner space of the shaft housing (2) by a cover plate (18) through which the shaft output end extends outwardly by passing through a bore (24), and said bearing sleeve (7) being inserted and held in an axial direction in a supporting member (8) which bears against the cover plate (18) on the side pointing towards the interior of the shaft housing (2) and overlaps axially with an extension (17) of the cover plate (18),
**characterized in that** the supporting member (8) is firmly connected with the extension (17) of the cover plate (18) by means of locking members (19), and that the cover plate (18), the supporting member (8) and the bearing sleeve (7), when mounted on the working shaft (4), form a handleable subassembly in combination therewith.

2. The processing tool as claimed in claim 1,
**characterized in that** the supporting member (8) comprises a lower tubular section (10) on the side close to the cover plate (18), said section merging, through a shoulder surface (11) extending approximately radially to the axis (5) of the working shaft (4), into an upper tubular section (9) which includes the bearing sleeve (7), with the extension (17) of the cover plate (18) being in locking engagement with said shoulder surface (11).

3. The processing tool as claimed in claim 2,
**characterized in that** the shoulder surface (11) has at least two openings (21) through which the locking members (19) extend.

4. The processing tool as claimed in claim 1,
**characterized in that** the locking members (19) are formed by respective studs having a hook-shaped end (20).

5. The processing tool as claimed in claim 1,
**characterized in that** four locking members (19) are provided which are uniformly spaced on the circumference of the supporting member (8) and/or the extension (17) of the cover plate (18).

6. The processing tool as claimed in claim 1,
**characterized in that** the centering and bearing of the working shaft (4) in the lower section of the shaft housing (2) and the bell-shaped housing (3) is performed by means of the cover plate (18).

7. The processing tool as claimed in claim 1,
**characterized in that** the cover plate (18) has its edge (25) adhesively bonded or welded to the inner surface of the bell-shaped housing (3).

8. The processing tool as claimed in claim 2,
**characterized in that** a radial packing ring (23) is arranged between the extension (17) of the cover plate (18) and the lower tubular section (10) of the supporting member (8) to provide a seal for the working shaft (4) against the cover plate (18) in the area of the bore.

9. The processing tool as claimed in claim 1,
**characterized in that** the bearing sleeve (7) includes a collar (14) taking support in an axial direction upon a bearing surface of the supporting member (8).

10. The processing tool as claimed in claim 9,
**characterized in that** the collar (14) is arranged to extend radially to the working shaft (4).

11. The processing tool as claimed in claim 1,
**characterized in that** the bearing sleeve (7) is retained in the supporting member (8) by means of detent elements (13).

12. The processing tool as claimed in claim 11,
**characterized in that** the detent elements (13) are provided on the supporting member (8).

13. The processing tool as claimed in claim 11,
**characterized in that** the detent elements are hook-shaped parts (13) embracing the end surface of the bearing sleeve (7).

14. The processing tool as claimed in claim 1,
**characterized in that** at the shaft input end the bearing sleeve (7) is fixedly held against an axial displacement by a circlip (16) mounted on the working shaft (4).

15. The processing tool as claimed in claim 1,
**characterized in that** at the shaft output end the bearing sleeve (7) is fixedly held against an axial displacement by a torus (15) formed on the working shaft (4) and protruding beyond the circumference of the working shaft (4).

16. The processing tool as claimed in claim 15,
**characterized in that** the torus is formed by a circlip (15).

## Revendications

1. Outil de travail pour agiter ou fragmenter des aliments, comprenant un arbre de travail (4), qui peut être couplé, dans un boîtier (2) de l'arbre, au voisinage de son extrémité d'entraînement, à un moteur d'entraînement d'un appareil de cuisine et qui est monté d'une manière centrée dans la zone de son extrémité menée, dans un coussinet de palier (7) et est fixé dans la direction axiale et à l'extrémité menée duquel est fixée une partie de travail (6), et dans lequel le boîtier (2) de l'arbre se prolonge, au niveau de l'extrémité menée de l'arbre (4), par une cloche élargie (3), dont l'espace intérieur est séparé de l'espace intérieur du boîtier (2) de l'arbre par une plaque de fermeture (18), qui est traversée par un perçage (24) depuis l'extrémité menée en direction de l'extérieur, et dans lequel le coussinet de palier (7) est inséré dans une partie de support (8), qui prend appui sur le côté situé sur la plaque de fermeture (18) et est dirigé vers l'espace intérieur du boîtier (12) de l'arbre et recouvre axialement un prolongement (17) de la plaque de fermeture (18) et est retenu dans la direction axiale, **caractérisé en ce que** la partie de support (8) est reliée de façon fixe au moyen de parties de verrouillage (19) au prolongement (17) de la plaque de fermeture (18) et que la plaque de fermeture (18), la partie de support (8) et le coussinet de palier (7) qui sont montés sur l'arbre de travail (4) forment avec ce dernier un module pouvant être manipulé.

2. Outil de travail selon la revendication 1, **caractérisé en ce que** la partie de support (8) possède un tronçon inférieur tubulaire (10), qui est tourné vers la plaque de fermeture (18) et se prolonge par une surface d'épaulement (11) qui s'étend approximativement radialement par rapport à l'axe (5) de l'arbre de travail (4), par une partie supérieure de forme tubulaire (9), qui comporte le coussinet de palier (7), le prolongement (17) de la plaque de fermeture (18) étant verrouillé dans cette surface d'épaulement (11).

3. Outil de travail selon la revendication 2, **caractérisé en ce que** dans la surface d'épaulement (11) sont prévues au moins deux ouvertures (21), dans lesquelles s'étendent les parties de verrouillage (19).

4. Outil de travail selon la revendication 1, **caractérisé en ce que** les parties de verrouillage (19) sont formées respectivement par une barrette comportant une extrémité en forme de crochet (20).

5. Outil de travail selon la revendication 1, **caractérisé en ce qu'**il est prévu quatre parties de verrouillage (19), qui sont réparties uniformément sur la périphérie autour de la partie de support (8) et/ou du prolongement (17) de la partie de fermeture (18).

6. Outil de travail selon la revendication 1, **caractérisé en ce que** le centrage du support et le tourillonnage de l'arbre de travail (4) sont réalisés dans la partie inférieure du boîtier (2) de l'arbre et de la cloche (3) de l'arbre, à l'aide de la plaque de fermeture (18).

7. Outil de travail selon la revendication 1, **caractérisé en ce que** la plaque de fermeture (18) est retenue à l'état collé ou soudé par son bord (25) dans la cloche (3) du boîtier.

8. Outil de travail selon la revendication 2, **caractérisé en ce qu'**une garniture d'étanchéité d'arbre (23), qui réalise l'étanchéité entre l'arbre de travail (4) et la plaque de fermeture (18) dans la zone du perçage, est disposée entre le prolongement (17) de la plaque de fermeture (18) et la partie inférieure de forme tubulaire (10) de la partie de support (8).

9. Outil de travail selon la revendication 1, **caractérisé en ce que** le coussinet de palier (7) comporte un collet (14), qui prend appui, dans la direction axiale, sur une surface de palier de la partie de support (8).

10. Outil de travail selon la revendication 9, **caractérisé en ce que** le collet (9) est agencé de manière à s'étendre radialement par rapport à l'arbre de travail (14).

11. Outil de travail selon la revendication 1, **caractérisé en ce que** le coussinet de palier (7) est retenu dans la partie de support (8) à l'aide d'éléments d'encliquetage (13).

12. Outil de travail selon la revendication 11, **caractérisé en ce que** les éléments d'encliquetage (13) sont formés sur la partie de support (8).

13. Outil de travail selon la revendication 11, **caractérisé en ce que** les éléments d'encliquetage sont des parties en forme de crochets (13), et s'engagent par dessus la surface frontale du coussinet de palier (7).

14. Outil de travail selon la revendication 1, **caractérisé en ce que** le coussinet de palier (7) est bloqué contre un déplacement axial, au niveau de son extrémité située côté entraînement, par une bague de sécurité (7) montée sur l'arbre de travail (4).

15. Outil de travail selon la revendication 1, **caractérisé en ce que** le coussinet de palier (7) est bloqué contre tout déplacement axial sur l'arbre de travail (4), au niveau de son extrémité située sur l'extrémité menée, par un rebord (15), qui est formé sur l'arbre de travail (4) et fait saillie sur la périphérie de l'arbre de travail (4).

16. Outil de travail selon la revendication 15, **caractérisé en ce que** le rebord est formé par une bague de sécurité (15) .
